# EUROPÄISCHE PATENTSCHRIFT

(11) **EP 1 493 547 B1**
(45) Veröffentlichungstag und Bekanntmachung des Hinweises auf die Patenterteilung: **14.12.2005**
(21) Anmeldenummer: 04015527.7
(22) Anmeldetag: 01.07.2004
(51) Int. Cl.: B29C 49/42, B29C 49/78, B29C 49/04

(54) **Verfahren und Vorrichtung zum Herstellen von Kunststoffhohlkörpern mit Saugluftunterstützung**
Method and apparatus for producing hollow articles of thermoplastic material by suction blow moulding
Procédé et dispositif pour fabriquer des articles de forme creuse en matière thermoplastique par aspiration et soufflage

(30) Priorität: 03.07.2003 DE 10330082; 14.08.2003 DE 10337490
(43) Veröffentlichungstag der Anmeldung: 05.01.2005
(73) Patentinhaber: MBK Maschinenbau Koetke GmbH, 29394 Reinstorf (DE)
(72) Erfinder: Koetke, Claus-Dieter, 29389 Bad Bodenteich (DE)
(74) Vertreter: Prietsch, Reiner

(56) Entgegenhaltungen:
- DE-A- 19 960 592
- PATENT ABSTRACTS OF JAPAN Bd. 0111, Nr. 60 (M-592), 23. Mai 1987 (1987-05-23) & JP 61 295021 A (NIPPON PLAST CO LTD; others: 01), 25. Dezember 1986 (1986-12-25)
- PATENT ABSTRACTS OF JAPAN Bd. 0111, Nr. 57 (M-590), 21. Mai 1987 (1987-05-21) & JP 61 287718 A (USHIGORO SUMITOMO), 18. Dezember 1986 (1986-12-18)
- SCHUELLER F: "MANUFACTURE OF INDUSTRIAL MOULDINGS USING THE 3D BLOW MOULDING METHOD" TECHNISCHE MITTEILUNGEN KRUPP, FRIED.KRUPP GMBH FACHBUECHEREI. ESSEN, DE, Nr. 2, Dezember 1998 (1998-12), Seiten 47-53, XP000799258 ISSN: 0930-9276

## Beschreibung

Die Erfindung betrifft ein Verfahren und eine Vorrichtung zum Herstellen von Kunststoffhohlkörpern durch Einführen eines schlauchartigen Vorformlings aus thermoplastischem Kunststoff in eine Blasform, deren Formhohlraum an seinem von der Einführöffnung abgewandten Ende mit dem Sauganschluss eines Sauggebläses verbunden ist, welches einen Saugluftstrom veränderbarer Geschwindigkeit erzeugt.

Bei einem derartigen Verfahren dauert das Einführen des Vorformlings in den Formhohlraum weniger als 2 Sekunden, entsprechend höchstens 3 bis 5 % der Dauer eines vollständigen Zyklus, der u.a. das Ausblasen des Vorformlings zum fertigen Artikel in der Blasform, die Abkühl- und die Entformzeit sowie die entsprechenden Werkzeugbewegungen umfasst. Deshalb war es bisher üblich, den Saugluftstrom durch Ein- und Ausschalten des Sauggebläses bzw. dessen Antriebsmotors nur während der tatsächlich benötigten Zeit zu erzeugen und nötigenfalls während des Einführens oder Einsaugens des Vorformlings in die Werkzeugkavität zu variieren. In beiden Fällen steht die Massenträgheit der beweglichen Teile des Sauggebläses der verzögerungsfreien Erzeugung, Geschwindigkeitsänderung und Beendigung des Saugluftstromes entgegen.

Zur schnellen und genauen Anpassung eines Ansaugvolumenstroms an die Einführgeschwindigkeit des Vorformlings ist aus der DE-C-199 60 592 ein Verfahren der einleitend angegebenen Gattung bekannt, bei dem im Saugkanal ein gesteuertes Servoventil vorgesehen ist, das den freien Strömungsquerschnitt des Saugkanals variiert. Der Vorformling soll nach diesem Verfahren gerade Wegabschnitte in der Blasform rascher als gekrümmte Wegabschnitte passieren. Deshalb wird im ersteren Fall ein höheres Saugluftvolumen pro Zeiteinheit erzeugt als im letzteren Fall. Allerdings erwärmt sich das Sauggebläse je nach dem Ausmaß der saugseitigen Drosselung rasch und beträchtlich, insbesondere wenn es, wie vorgesehen zu sein scheint, während der gesamten Zykluszeit läuft. Ein weiterer Nachteil besteht darin, dass die von dem Saugluftstrom auf den Vorformling ausgeübte Zugkraft mit dem Öffnen des saugseitigen Servoventils schlagartig wirksam wird. Dadurch kann es zur Bildung von Marken auf dem Vorformling kommen, die auch an dem Fertigartikel sichtbar bleiben. Ein weiterer Nachteil der saugseitigen Drosselung besteht trotz eines druckseitig vorgesehenen Schalldämpfers in einer nicht unerheblichen Geräuschentwicklung. Diese Nachteile gelten auch für eine in der DE-C-199 60 592 angedeutete Variante mit saugseitigem druckbegrenztem Bypass, deren Einzelheiten nicht erläutert sind.

Der Erfindung liegt die Aufgabe zugrunde, ein Verfahren und eine Vorrichtung der einleitend angegeben Gattung zur Verfügung zu stellen, die energiesparend und ohne zu starke Erwärmung des Druckgebläses eine rasche und präzise Einstellung und Änderung der Saugluftgeschwindigkeit und damit der auf den Vorformling wirkenden Saug- bzw. Zugkraft erlauben.

Eine erste Lösung dieser Aufgabe besteht darin, dass der Sauganschluss des Sauggebläses während der Zeit, in der zumindest das von der Einführöffnung abgewandte Ende des Formhohlraums druckdicht verschlossen ist, mit einer Nebenluftöffnung kommuniziert, dass vor dem Beginn des Einführens des Vorformlings in die Blasform die Saugleistung des Sauggebläses von einem Leerlaufwert auf einen Sollwert erhöht wird und dass die jeweils erforderliche Geschwindigkeit des Saugstroms durch den Formhohlraum durch Verändern des freien Querschnitts des Auslasses auf der Druckseite des Sauggebläses eingestellt wird.

Bei diesem Verfahren wird also das Sauggebläse während der Zeit innerhalb eines Maschinenzyklus, in der kein Saugluftstrom durch den Formhohlraum benötigt wird, nicht vollständig abgeschaltet. Dadurch wird einerseits bei geringem Leistungsbedarf eine ausreichende Kühlung des Sauggebläses sichergestellt, andererseits die Zeit zum Hochfahren des Sauggebläses auf den Soll- oder Nennwert der Saugleistung beträchtlich verkürzt. Die Leerlaufsaugleistung des Sauggebläses und dementsprechend in etwa auch der Volumendurchsatz oder Volumenstrom des Saugstroms können bei etwa 10 % der entsprechenden Soll- oder Nennwerte liegen. Bei Beginn des Einführens des Vorformlings in die Blasform hat das Sauggebläse seine volle Saugleistung erreicht. Bei voller Saugleistung hat der Saugstrom seine größte Geschwindigkeit und übt damit auch die größte Zugkraft auf den Vorformling aus. Anders als in der DE-C-199 60 592 angegeben, wird diese volle Saugleistung jedoch nur benötigt, soweit der Vorformling stark gekrümmte Abschnitte des Formhohlraums passieren muss. Geringere Geschwindigkeiten des Saugstromes lassen sich nahezu trägheitslos durch das Verändern des freien Querschnittes des Auslasses auf der Druckseite des Sauggebläses über die entsprechend programmierte Maschinensteuerung einstellen.

Eine weitere verfahrensmäßige Lösung der genannten Aufgabe besteht darin, dass vor dem Beginn des Einführens des Vorformlings in die Blasform die Saugleistung des Sauggebläses von einem Leerlaufwert auf einen Sollwert erhöht wird und die jeweils erforderliche Geschwindigkeit des Saugstromes durch Zurückspeisen eines einstellbaren Teils des Druckluftstromes des Sauggebläses von dessen Druckseite auf die Saugseite eingestellt wird.

Gegenüber der erstgenannten Lösung hat diese alternative Lösung den zusätzlichen Vorteil, dass auf der Strecke zwischen der Blasform und dem Sauggebläse keine Nebenluftöffnung, die taktrichtig freigegeben und verschlossen werden muss, benötigt wird.

Eine vorteilhafte Weiterbildung der zweiten Lösung besteht darin, dass der freie Querschnitt des Auslasses auf der Druckseite des Sauggebläses und der auf die Saugseite des Sauggebläses zurückgespeiste Teil des Druckluftstroms differenziell verändert werden.

Bevorzugt wird die Geschwindigkeit des Saugluftstromes in der Saugleitung, alternativ der Unterdruck in der Saugleitung gemessen, der gemessene Wert als IST-Wert mit einem SOLL-Wert verglichen, und die Abweichung als Regelgröße zur Veränderung der Geschwindigkeit des Saugluftstroms verarbeitet.

Eine Vorrichtung insbesondere zur Durchführung des Verfahrens gemäß der ersten Lösung zeichnet sich dadurch aus, dass auf der Saugseite des Gebläses, das eine zwischen einem Leerlaufwert und einem erhöhten Wert veränderbare Saugleistung hat, eine freigebbare und verschließbare Nebenluftöffnung vorgesehen ist und dass auf der Auslassseite des Sauggebläses ein servogesteuertes Ventil zur Veränderung des freien Querschnitts des Auslasses in Abhängigkeit von einem von der Maschinensteuerung erzeugten Signal, das repräsentativ für die Einführung des Vorformlings in den Formhohlraum ist, angeordnet ist.

Die Nebenluftöffnung kann aus mindestens einem Kanal bestehen, der an mindestens einem der am saugseitigen Ende der Blasform angeordneten Schieber derart mündet, dass der Schieber nur in seiner vorgeschobenen, die Blasform abdich-tenden Stellung den Kanal mit der Sauganschlussöffnung der Blasform verbindet.

Eine im Vergleich dazu vorteilhaftere Ausführungsform zeichnet sich dadurch aus, dass auf der Saugseite des Gebläses ein 3/2-Wegeventil angeordnet ist, das über eine Steuerleitung von der Maschinensteuerung betätigbar ist und dessen erster Anschluss mit dem von der Einführöffnung abgewandten Ende der Blasform verbunden ist, dessen zweiter Anschluss mit dem Sauganschluss des Sauggebläses verbunden ist und dessen dritter Anschluss die freigebbare und verschließbare Nebenluftöffnung bildet, die frei mit der Umgebungsluft kommuniziert. Damit erübrigt es sich, mindestens eine der Blasformhälften mit einem Zusatzkanal auszustatten und den betreffenden Schieber mit einer Ausnehmung zu versehen, über die in der geschlossenen Stellung des Schiebers die Nebenluft zuströmt.

Bevorzugt sind dem dritten Anschluss des 3/2-Wegeventils ein Grobfilter und ein Schalldämpfer vorgeschaltet. Das Grobfilter verhindert das Einsaugen von Fremdkörpern, die gegebenenfalls das Sauggebläse beschädigen können. Der Schalldämpfer mindert das Ansauggeräusch, das insbesondere in den Übergangsphasen nicht unbeträchtlich ist, d.h. wenn das Sauggebläse von seiner Leerlaufsaugleistung auf die volle Saugleistung übergeht und umgekehrt.

Eine Vorrichtung insbesondere zur Durchführung des Verfahrens gemäß der zweiten Lösung zeichnet sich dadurch aus, dass die Druckseite des Sauggebläses das eine zwischen einem Leerlaufwert und einem erhöhten Wert veränderbare Saugleistung hat, mit dessen Saugseite über einen Bypass und ein servogesteuertes Ventil zur Veränderung des freien Querschnitts des Bypasses verbunden ist.

Letzteres lässt sich insbesondere in der Form verwirklichen, dass auf der Druckseite des Sauggebläses ein Differenzialventil angeordnet ist, dessen Einlass mit dem Druckauslass des Sauggebläses, dessen erster Auslass mit der Umgebung und dessen zweiter Auslass mit dem Bypass kommunizieren.

Eine weitere Verbesserung besteht darin, dass in der Saugleitung stromauf von der Einmündung des Bypasskanals ein die Geschwindigkeit des Saugluftstroms oder den Unterdruck der Saugleitung messender Sensor angeordnet ist, dessen Anschlüsse mit der Maschinensteuerung verbunden sind.

In der Zeichnung sind Vorrichtungen nach den vorliegenden Vorschlägen beispielhaft und schematisch vereinfacht dargestellt. Es zeigt:
- Fig. 1: den hier interessierenden Teil einer Maschine zur Herstellung von Kunststoffhohlkörpern unter Einsatz des ersten Verfahrens nach der Erfindung,
- Fig. 2: eine andere Ausführungsform der Maschine gemäß Figur 1 und
- Fig. 3: das Sauggebläse und die weiteren an der Einstellung der Saugluftgeschwindigkeit beteiligten Teile einer Maschine, die gemäß dem zweiten Verfahren nach der Erfindung arbeitet.

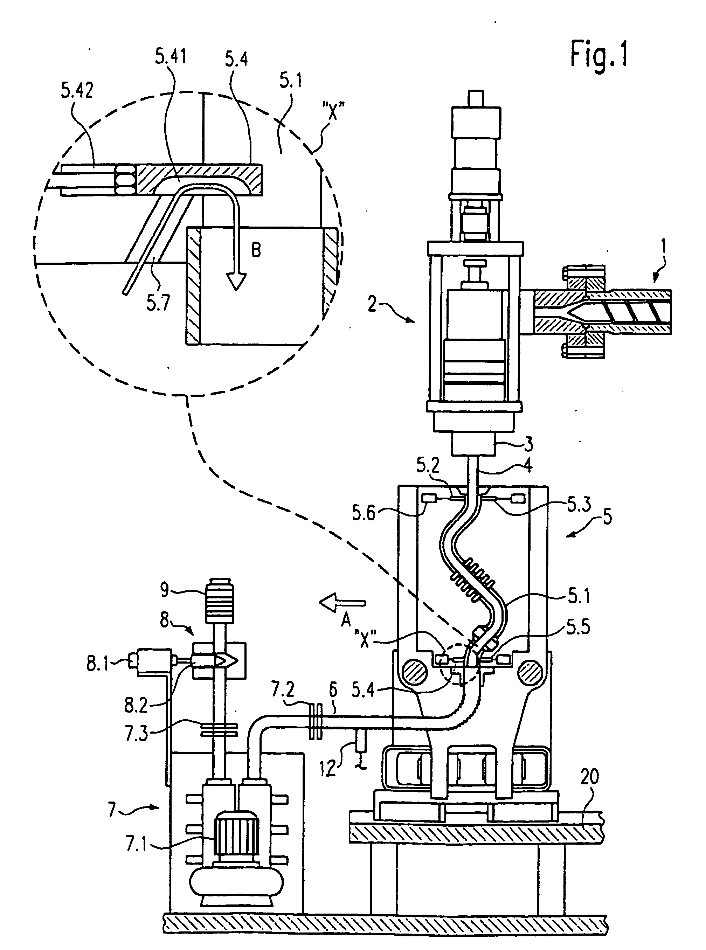

**Fig. 1** zeigt einen schematisch im Längsschnitt dargestellten Teil eines Extruders 1, der einem Düsenkopf 2, in der Regel einen sog. Staukopf, plastifizierten Kunststoff, z.B. PA (Polyamid), PP (Polypropylen) oder ABS (AcrylnitrilButadien-Styrol-Copolymere) zuführt. In der Praxis sind an einen derartigen Düsenkopf häufig auch mehrere, unterschiedliche Kunststoffe liefernde Extruder angeschlossen, wenn coextrudierte Kunststoffhohlkörper hergestellt werden sollen. Der Düsenkopf 2 extrudiert über eine gewöhnlich mit einer Spaltverstellung ausgestattete Düse 3 einen schlauchartigen Vorformling 4 in die (obere) Einführöffnung einer geteilten Blasform 5. In der Zeichnung ist eine der beiden Formhälften weggelassen, so dass die dem herzustellenden Kunststoffhohlkörper entsprechende Kontur des Formhohlraums 5.1 deutlich wird, dessen Längsachse in diesem Beispiel u.a. zwei 90°-Bögen beschreibt. Die Blasform 5 ist auf einer Horizontalführung 20 in Richtung des Pfeiles A zu einer nicht dargestellten Blasstation verfahrbar, in welcher der Vorformling 4 durch Einblasen von Druckluft in an sich bekannter Weise zu dem fertigen Kunststoffhohlkörper umgeformt wird.

Um das Einführen des Vorformlings 4 in den Formhohlraum 5.1 zu unterstützen, ist der Formhohlraum 5.1 an seinem der Einführöffnung abgewandten, unteren Ende über einen flexiblen Schlauch 6 mit einer dem Verfahrweg der Blasform 5 entsprechend bemessenen Länge mit dem Sauganschluss 7.2 eines Sauggebläses 7 verbunden, das z.B. einen mittels eines drehzahlregelbaren Elektromotors 7.1 angetriebenen Seitenkanalverdichter umfassen kann. Auf der Auslassseite, anschließend an den Druckanschluss 7.3 des Sauggebläses 7, ist ein Ventil 8 angeordnet, auf das ein Schalldämpfer 9 folgt. Das Ventil 8 umfasst einen Stellmotor 8.1, z.B. einen Hydraulikzylinder, für ein bewegliches Ventilorgan, hier in Form eines Kegelschiebers 8.2, der schematisch in der Offenstellung gezeichnet ist. Ebenso wie der Elektromotor 7.1 und alle übrigen beweglichen Teile der Vorrichtung ist auch der Stellmotor 8.1 mit einer nicht dargestellten Maschinensteuerung verbunden, welche über den Stellmotor 8.1 das Ventilorgan 8.2 proportional verstellt, um die Geschwindigkeit des Saugluftstroms durch den Formhohlraum 5.1 taktrichtig entsprechend dem jeweiligen, programmierten Bedarf zu steuern.

Innerhalb eines vollständigen Maschinenzyklus nimmt das Einführen des Vorformlings 4 in dem Formhohlraum 5.1 bis zu dessen der Einführöffnung abgewandtem Ende gewöhnlich weniger als etwa zwei Sekunden, d.h. wenige Prozente eines Maschinenzyklus, in Anspruch. Während der übrigen Zykluszeit hält die Maschinensteuerung das Sauggebläse 7 auf einem energiesparenden Leerlaufwert. Zumindest während des größten Teils dieser Zeit ist der Formhohlraum 5.1 an seinem oberen Ende durch die angedeuteten oberen Schieber 5.2 und 5.3 sowie an seinem unteren Ende durch die unteren Schieber 5.4 und 5.5 verschlossen. Die Schieber werden von der Maschinensteuerung über angedeutete Zylinder wie 5.6 betätigt. In der geschlossenen Stellung gibt mindestens einer der unteren Schieber 5.4 bzw. 5.5 entsprechend der vergrößert herausgezeichneten Einzelheit "X" eine Nebenluftöffnung frei. Hierzu ist die Blasform 5.1 an ihrem unteren Ende mit einem Kanal 5.7 versehen, der außerhalb des Formhohlraumes 5.1 an der unteren Fläche des Schiebers 5.4 mündet, welcher seinerseits eine Ausnehmung 5.41 hat, die in der vorgeschobenen Schließstellung des Schiebers 5.4 den Kanal 5.7 mit dem Anschluss des Schlauches 6 verbindet, in der zurückgezogenen Offenstellung hingegen den Kanal 5.7 zu dem Formhohlraum 5.1 hin verschließt. Ohne diese Nebenluftöffnung würde das Sauggebläse 7 auch im Leerlauf in dem Schlauch 6 einen Unterdruck erzeugen, was zu einer erhöhten Leistungsaufnahme des Elektromotors 7.1 führen würde.

Kurz vor dem Beginn des Einführens des Vorformlings 4 in den Formhohlraum 5.1 und bei geöffneten Schiebern 5.2 bis 5.5 erhöht die Maschinensteuerung die Saugleistung des Sauggebläses 7 von einem Leerlaufwert auf einen vorgegebenen Sollwert. Während des Einführens des Vorformlings 4, d.h. während dessen vorderes Ende, unterstützt von der durch den Saugluftstrom erzeugten Zugkraft, den Formhohlraum 5.1 durchläuft, verändert dann die Maschinensteuerung entsprechend dem Fortschritt des vorderen Endes des Vorformlings 4 durch Verstellung des Ventilorgans 8.2 mittels des Stellmotors 8.1 die Geschwindigkeit des Saugstromes durch Verändern des freien Querschnitts des Auslasses auf der Druckseite des Sauggebläses 7, uzw. vorzugsweise so, dass der stärkste Saugstrom und dementsprechend die größte Zugkraft auf den Vorformling 4 dann ausgeübt wird, wenn dieser die stark gekrümmten Abschnitte des Formhohlraumes 5.1 passiert. Die dazu jeweils erforderliche Stellung des Ventilschiebers 8.2 wird in Abhängigkeit von dem Verlauf der Längsachse des Formhohlraums 5.1 am besten empirisch beim Einfahren der Maschine ermittelt und dann in das Programm der Maschinensteuerung geschrieben. Statt den Saugstrom in dieser Weise lediglich zu steuern, kann dessen Geschwindigkeit auch geregelt werden, uzw. mittels eines entweder die Geschwindigkeit oder/und den Durchsatz des Saugstromes, d.h. den jeweiligen IST-Wert ermittelnden Sensors 12, der an einer geeigneten Stelle des Schlauches 6 (oder auch in unmittelbarer Nähe des Sauganschlusses des Sauggebläses 7) angeordnet ist.

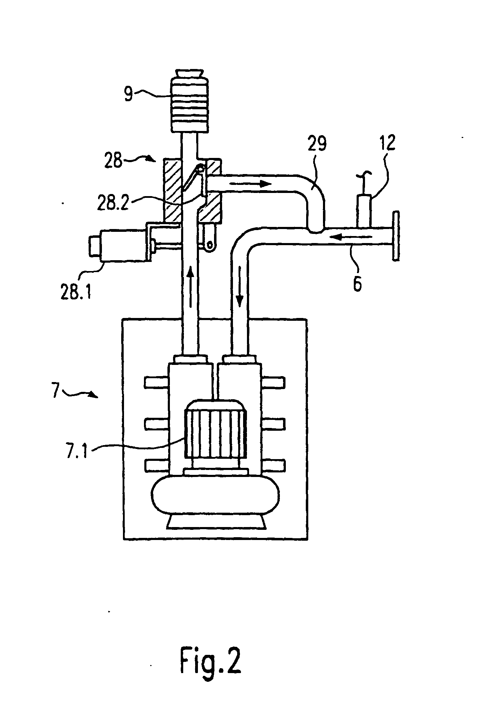

**Fig. 2** zeigt das Sauggebläse 7 und die weiteren, an der Einstellung der Saugluftgeschwindigkeit beteiligten Teile einer nach dem gleichen Prinzip arbeitenden Maschine, deren Blasform jedoch im Gegensatz zu Fig. 1 keinen Nebenluftkanal 5.7 und dementsprechend auch keine Ausnehmung 5.41 in dem Schieber 5.4 hat. Bei der Ausführungsform nach Fig. 2 folgt auf den Druckanschluss des Sauggebläses 7 ein Differenzialventil 28, das zusätzlich zu der zu dem Schalldämpfer 9 führenden Auslassöffnung eine weitere Auslassöffnung hat, welche über eine Bypassleitung 29 mit der Einlassseite des Sauggebläses 7 verbunden ist. Das über einen dem Stellantrieb 8.1 in Fig. 1 entsprechenden Stellantrieb 28.1 und einen Hebel betätigte Ventilorgan 28.2 ist als Klappe ausgebildet, die in der in gestrichelten Linien gezeichneten Stellung die zweite Auslassöffnung und damit die Bypassleitung 29 verschließt, hingegen in der in ausgezogenen Linien gezeichneten Stellung die erste Auslassöffnung vollständig verschließt und die zweite Auslassöffnung vollständig freigibt. Die letztere Stellung nimmt das Ventilorgan 28.2 ein, solange sich das Sauggebläse im Leerlaufbetrieb befindet. In der anderen Stellung des Ventilorgans 28.2 erzeugt das Sauggebläse 7 den maximalen Saugstrom, bzw. dessen vorgegebenen Sollwert. Zur Verminderung der Saugstromgeschwindigkeit und damit der auf den Vorformling 4 wirkenden Zugkraft während des Einführens in den Formhohlraum 5.1 bringt die Maschinensteuerung das Ventilorgan 28.2 über den Stellantrieb 28.1 in die entsprechende Zwischenstellung.

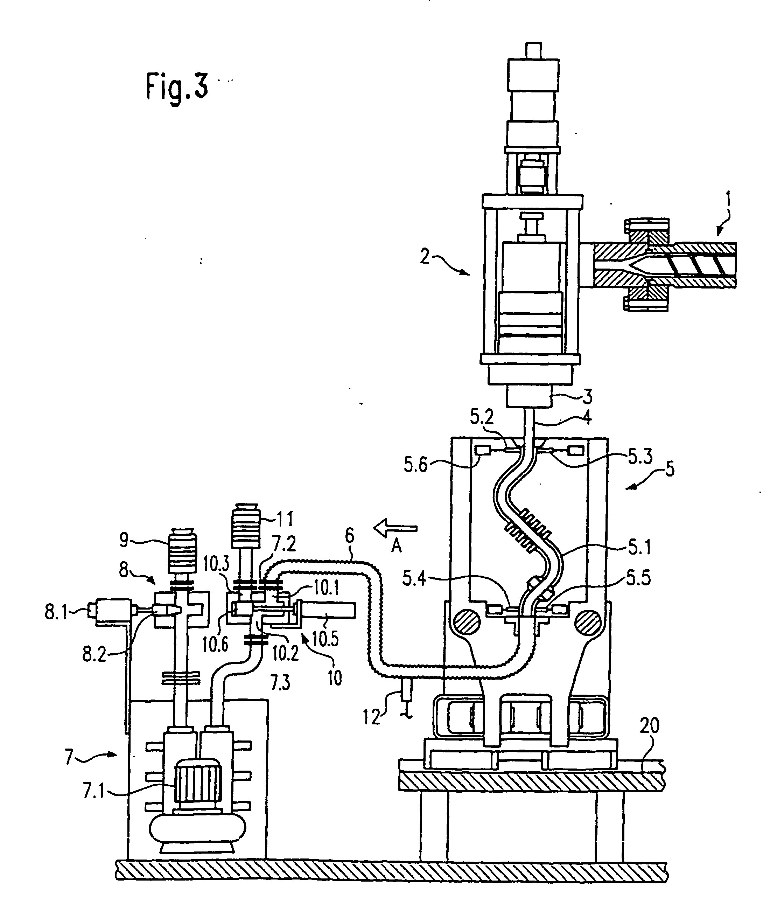

**Fig. 3** zeigt eine ähnliche Ausführungsform der Maschine wie Figur 1, die jedoch ebenfalls keinen Nebenluftkanal 5.7 und dementsprechend auch keine Ausnehmung 5.41 in dem Schieber 5.4 hat. Stattdessen ist in dem von dem Anschlussflansch 7.2 zu dem Sauggebläse 7 führenden Leitungsstück 7.3 ein 3/2-Wege- oder Umschaltventil 10 angeordnet. Dessen erster Anschluss 10.1 ist mit dem Anschlussflansch 7.2 verbunden. Der zweite Anschluss 10.2 ist mit dem Saugstutzen des Sauggebläses 7 verbunden. Der dritte Anschluss 10.3 kommuniziert über einen Schalldämpfer 11 und ein Grobfilter (nicht dargestellt) mit der Umgebung. Das Umschaltventil 10 hat ein über einen Stellmotor 10.5, z.B. einen Pneumatikzylinder, verschiebbares Ventilorgan 10.6. In der gezeichneten Stellung ist der Formhohlraum 5.1 über den flexiblen Schlauch 6 mit dem Sauggebläse 7 verbunden. In der anderen Stellung gibt das Ventilorgan 10.6 den dritten Anschluss 10.3 des Ventils 10 frei und verschließt dessen ersten Anschluss 10.1.

Auslass- oder druckseitig folgen auf das Gebläse 7 die gleichen Teile wie in der in Figur 1 dargestellten Ausführungsform der Maschine. Kurz vor dem Beginn des Einführens des Vorformlings 4 in den Formhohlraum 5.1 und bei geöffneten Schiebern 5.2 bis 5.5 erhöht die Maschinensteuerung die Saugleistung des Sauggebläses 7 von einem Leerlaufwert auf einen vorgegebenen Sollwert und bringt das Ventil 10 in die gezeichnete Stellung, in der die Nebenluftöffnung entspechend dem Anschluss 10.3 verschlossen ist. Der weitere Ablauf ist der gleiche wie derjenige der Maschine in Figur 1. Sobald der Vorformling vollständig in den Formhohlraum 5.1 eingeführt ist, schließt die Maschinensteuerung die Schieber 5.2 bis 5.5 und bringt über den Stellmotor 10.5 das Ventilorgang 10.6 des Ventils 10 in die zu der gezeichneten Stellung spiegelbildliche Stellung entsprechend einem drehzahlgeminderten Leerlaufbetrieb des Sauggebläses, dessen Sauganschluss nun mit dem dritten Anschluss 10.3 kommuniziert und Luft aus der Umgebung ansaugt.

## Patentansprüche

1. Verfahren zum Herstellen von Kunststoffhohlkörpern durch Einführen eines schlauchartigen Vorformlings aus thermoplastischem Kunststoff in eine Blasform, deren Formhohlraum an seinem von der Einführöffnung abgewandten Ende mit dem Sauganschluss eines Sauggebläses verbunden ist, welches einen Saugluftstrom veränderbarer Geschwindigkeit erzeugt, **dadurch gekennzeichnet, dass** der Sauganschluss des Sauggebläses während der Zeit, in der zumindest das von der Einführöffnung abgewandte Ende des Formhohlraums druckdicht verschlossen ist, mit einer Nebenluftöffnung kommuniziert, dass vor dem Beginn des Einführens des Vorformlings in die Blasform die Saugleistung des Sauggebläses von einem Leerlaufwert auf einen Sollwert erhöht wird und dass die jeweils erforderliche Geschwindigkeit des Saugstroms durch den Formhohlraum durch Verändern des freien Querschnitts des Auslasses auf der Druckseite des Sauggebläses eingestellt wird.

2. Verfahren zum Herstellen von Kunststoffhohlkörpern durch Einführen eines schlauchartigen Vorformlings aus thermoplastischem Kunststoff in eine Blasform, deren Formhohlraum an seinem von der Einführöffnung abgewandten Ende mit dem Sauganschluss eines Sauggebläses verbunden ist, welches einen Saugluftstrom veränderbarer Geschwindigkeit erzeugt, **dadurch gekennzeichnet, dass** vor dem Beginn des Einführens des Vorformlings in die Blasform die Saugleistung des Sauggebläses von einem Leerlaufwert auf einen Sollwert erhöht wird und die jeweils erforderliche Geschwindigkeit des Saugstromes durch Zurückspeisen eines einstellbaren Teils des Druckluftstromes des Sauggebläses von dessen Druckseite auf die Saugseite eingestellt wird.

3. Verfahren nach den Ansprüchen 1 oder 2, **dadurch gekennzeichnet, dass** der freie Querschnitt des Auslasses auf der Druckseite des Sauggebläses und der auf die Saugseite des Sauggebläses zurückgespeiste Teil des Druckluftstroms differenziell verändert werden.

4. Verfahren nach einem der Ansprüche 1 bis 3, **dadurch gekennzeichnet, dass** die Geschwindigkeit des Saugluftstroms in der Saugleitung, alternativ der Unterdruck in der Saugleitung, gemessen, der gemessene Wert als Istwert mit einem Sollwert verglichen, und die Abweichung als Regelgröße zur Veränderung der Geschwindigkeit des Saugluftstroms verarbeitet wird.

5. Vorrichtung zum Herstellen von Kunststoffhohlkörpern durch Einführen eines schlauchartigen Vorformlings (4) aus thermoplastischem Kunststoff in eine Blasform (5), deren Formhohlraum (5.1) an seinem von der Einführöffnung abgewandten Ende mit dem Sauganschluss (7.2) eines Sauggebläses (7) verbunden ist, welches einen Saugluftstrom veränderbarer Geschwindigkeit erzeugt, insbesondere zur Durchführung des Verfahrens nach einem der Anprüche 1, 3 oder 4, **dadurch gekennzeichnet, dass** auf der Saugseite des Gebläses (7), das eine zwischen einem Leerlaufwert und einem erhöhten Wert veränderbare Saugleistung hat, eine freigebbare und verschließbare Nebenluftöffnung (5.7) vorgesehen ist und dass auf der Auslassseite des Sauggebläses (7) ein servogesteuertes Ventil (8) zur Veränderung des freien Querschnitts des Auslasses in Abhängigkeit von einem von der Maschinensteuerung erzeugten Signal, das repräsentativ für die Einführgeschwindigkeit des Vorformlings (4) in den Formhohlraum (5.1) ist, angeordnet ist.

6. Vorrichtung nach Anspruch 5, **dadurch gekennzeichnet, dass** die Nebenluftöffnung aus mindestens einem Kanal (5.7) besteht, der an mindestens einem der am saugseitigen Ende der Blasform (5) angeordneten Schieber (5.4) derart mündet, dass der Schieber nur in seiner vorgeschobenen, die Blasform (5) abdichtenden Stellung den Kanal (5.7) mit der Sauganschlussöffnung der Blasform (5) verbindet.

7. Vorrichtung nach Anspruch 5, **dadurch gekennzeichnet, dass** auf der Saugseite des Gebläses (7) ein 3/2-Wegeventil (10) angeordnet ist, das über eine Steuerleitung von der Maschinensteuerung betätigbar ist und dessen erster Anschluss (10.1) mit dem von der Einführöffnung abgewandten Ende der Blasform (5) verbunden ist, dessen zweiter Anschluss (10.2) mit dem Sauganschluss (7.2) des Sauggebläses (7) verbunden ist und dessen dritter Anschluss (10.3) die freigebbare und verschließbare Nebenluftöffnung bildet, die frei mit der Umgebungsluft kommuniziert.

8. Vorrichtung nach Anspruch 7, **dadurch gekennzeichnet, dass** dem dritten Anschluss (10.3) des 3/2-Wegeventils (10) ein Schalldämpfer (11) vorgeordnet ist.

9. Vorrichtung nach Anspruch 7 oder 8, **dadurch gekennzeichnet, dass** dem dritten Anschluss (10.3) des 3/2-Wegeventils (10) ein Grobfilter vorgeordnet ist.

10. Vorrichtung zum Herstellen von Kunststoffhohlkörpern durch Einführen eines schlauchartigen Vorformlings (4) aus thermoplastischem Kunststoff in eine Blasform (5), deren Formhohlraum (5.1) an seinem von der Einführöffnung abgewandten Ende mit dem Sauganschluss (7.2) eines Sauggebläses (7) verbunden ist, welches einen Saugluftstrom veränderbarer Geschwindigkeit erzeugt, insbesondere zur Durchführung des Verfahrens nach Anpruch 5 **dadurch gekennzeichnet dass** die Druckseite (7.3) des Sauggebläses, das eine zwischen einem Leerlaufwert und einem erhöhten Wert veränderbare Saugleistung hat, (7) mit dessen Saugseite (7.2) über einen Bypass (29) und ein servogesteuertes Ventil (28) zur Veränderung des freien Querschnitts des Bypasses verbunden ist.

11. Vorrichtung nach Anspruch 10, **dadurch gekennzeichnet, dass** das Ventil ein Differenzialventil (28, 28.2) ist, dessen Einlass mit dem Druckauslass des Sauggebläses (7), dessen erster Auslass mit der Umgebung und dessen zweiter Auslass mit dem Bypass (29) kommunizieren.

12. Vorrichtung nach einem der Ansprüche 5 bis 11, **dadurch gekennzeichnet, dass** in der Saugleitung (6) ein die Geschwindigkeit des Saugluftstroms oder den Unterdruck der Saugleitung (6) messender Sensor (12) angeordnet ist, dessen Anschlüsse mit der Maschinensteuerung verbunden sind.

## Claims

1. A method for producing hollow plastic bodies by introducing a tubular preform made of a thermoplastic material into a blow mold whose forming hollow space is connected at its end averted from the insertion opening with a suction connection of an aspirator which produces a suction air stream of variable speed, **characterized in that** the suction connection of the aspirator communicates with a secondary air opening during the time in which at least the end of the forming hollow space averted from the insertion opening is sealed in a pressure-tight manner, that prior to the start of the insertion of the preform into the blow mold the suction output of the aspirator is increased from an idle value to a setpoint value, and that the respectively required speed of the suction flow through the forming hollow space is set by changing the free cross section of the outlet on the pressure side of the aspirator.

2. A method for producing hollow plastic bodies by introducing a tubular preform made of a thermoplastic material into a blow mould whose forming hollow space is connected at its end averted from the insertion opening with a suction connection of an aspirator which produces a suction air stream of variable speed, **characterized in that** prior to the start of the introduction of the preform into the blow mold the suction output of the aspirator is increased from an idle value to a setpoint value and the respectively required speed of the suction flow is set by the return feed of an adjustable portion of the pressure air stream of the aspirator from its pressure side to its suction side.

3. A method according to the claims 1 or 2, **characterized in that** the free cross section of the outlet on the pressure side of the aspirator and the portion of the pressure air stream fed in return flow to the suction side of the aspirator are changed differentially.

4. A method according to one of the claims 1 to 3, **characterized in that** the speed of the suction air stream in the suction line is measured, and alternatively the negative pressure in the suction lie, and the deviation is processed as a control variable for changing the speed of the suction air stream.

5. An apparatus for producing hollow plastic bodies by introducing a tubular preform (4) made of a thermoplastic material into a blow mold (5) whose forming hollow space (5.1) is connected at its end averted from the insertion opening with the suction connection (7.2) of an aspirator (7) which produces a suction air stream of variable speed, especially for performing the method according to one of the claims 1, 3 or 4, **characterized in that** a releasable and sealable secondary air opening (5.7) is provided on the suction side of the aspirator (7) having a suction output which can be changed between an idle running value and an increased value, and that on the outlet side of the aspirator (7) a servo-controlled valve (8) is arranged for changing the free cross section of the outlet depending on a signal which is generated by the machine control system and is representative for the insertion speed of the preform (4) into the forming hollow space (5.1).

6. An apparatus according to claim 5, **characterized in that** the secondary air opening consists of at least one conduit (5.7) which opens in at least one slide (5.4) arranged at the suction-sided end of the blow mold (5) in such a way that the slide connects the conduit (5.7) with the suction connection opening of the blow mold (5) only in its advanced position sealing the blow mold (5).

7. An apparatus according to claim 5, **characterized in that** a 3/2-way valve (10) is arranged on the suction side of the aspirator (7), which valve can be actuated via a control line by the machine control system and whose first connection (10.1) is connected with the end of the blow mold (5) averted from the insertion opening, whose second connection (10.2) is connected with the suction connection (7.2) of the aspirator (7) and whose third connection (10.3) forms the releasable and sealable secondary air opening which communicates freely with the ambient air.

8. An apparatus according to claim 7, **characterized in that** a sound absorber (11) is arranged upstream of the third connection (10.3) of the 3/2-way valve (10).

9. An apparatus according to claim 7 or 8, **characterized in that** a coarse filter is arranged upstream of the third connection (10.3) of the 3/2-way valve (10).

10. An apparatus for producing hollow plastic bodies by introducing a tubular preform (4) made of a thermoplastic material into a blow mold (5) whose forming hollow space (5.1) is connected at its end averted from the insertion opening with the suction connection (7.2) of an aspirator (7) which produces a suction air stream of variable speed, especially for performing the method according to claim 5, **characterized in that** the pressure side (7.3) of the aspirator (7) which comprises a suction output which can be changed between an idle running value and an increased value is connected with its suction side (7.2) via a by-pass (29) and a servo-controlled valve (28) for changing the free cross section of the by-pass.

11. An apparatus according to claim 10, **characterized in that** the valve is a differential valve (28, 28.2) whose inlet communicates with the pressure outlet of the aspirator (7) whose first outlet communicates with the ambient environment and whose second outlet communicates with the by-pass (29).

12. An apparatus according to one of the claims 5 to 11, **characterized in that** a sensor (12) is arranged in the suction line (6), which sensor measures the speed of the suction air stream or the negative pressure of the suction line (6) and whose connections are connected with the machine control system.

## Revendications

1. Procédé pour la fabrication d'objets creux en plastique par introduction d'une ébauche en forme de tube en matière thermoplastique dans un moule à souffler dont la cavité est reliée, à son extrémité opposée à l'ouverture d'introduction, au raccord d'aspiration d'une soufflante d'aspiration produisant un flux d'air d'aspiration de vitesse variable, **caractérisé en ce que** le raccord d'aspiration de la soufflante d'aspiration communique, pendant que l'extrémité de la cavité de moule orientée à l'opposé de l'ouverture d'introduction, au moins, est fermée de manière étanche à la pression, avec une ouverture d'air secondaire, **en ce qu'**avant le début de l'introduction de l'ébauche dans le moule de soufflage, la puissance d'aspiration de la soufflante d'aspiration est augmentée d'une valeur de point mort à une valeur de consigne, et **en ce que** la vitesse nécessaire du flux d'aspiration à travers la cavité de moule est ajustée par modification de la section libre de la sortie du côté du refoulement de la soufflante d'aspiration.

2. Procédé pour la fabrication d'objets creux en plastique par introduction d'une ébauche en forme de tube en matière thermoplastique dans un moule à souffler dont la cavité est reliée, à son extrémité opposée à l'ouverture d'introduction, au raccord d'aspiration d'une soufflante d'aspiration produisant un flux d'air d'aspiration de vitesse variable, **caractérisé en ce qu'**avant le début de l'introduction de l'ébauche dans le moule de soufflage, la puissance d'aspiration de la soufflante d'aspiration est augmentée d'une valeur de point mort à une valeur de consigne et la vitesse nécessaire du flux d'aspiration est ajustée par renvoi d'une fraction réglable du flux d'air comprimé de la soufflante d'aspiration du côté de refoulement de celle-ci au côté d'aspiration.

3. Procédé selon la revendication 1 ou 2, **caractérisé en ce que** la section libre de la sortie du côté de refoulement de la soufflante d'aspiration et la part du flux d'air comprimé ramenée au côté d'aspiration de la soufflante d'aspiration sont modifiées de manière différentielle.

4. Procédé selon l'une quelconque des revendications 1 à 3, **caractérisé en ce que** la vitesse du flux d'air aspiré dans la conduite d'aspiration et, en alternance, la dépression dans la conduite d'aspiration sont mesurées, la valeur mesurée sert de valeur réelle pour la comparaison avec une valeur de consigne, et l'écart est traité comme grandeur de réglage pour modifier la vitesse du flux d'air aspiré.

5. Dispositif pour la fabrication d'objets creux en plastique par introduction d'une ébauche (4) en forme de tube en matière thermoplastique dans un moule à souffler (5) dont la cavité (5.1) est reliée, à son extrémité opposée à l'ouverture d'introduction, au raccord d'aspiration (7.2) d'une soufflante d'aspiration (7) produisant un flux d'air d'aspiration de vitesse variable, en particulier pour la mise en oeuvre du procédé selon l'une quelconque des revendications 1, 3 ou 4, **caractérisé en ce qu'**il est prévu du côté d'aspiration de la soufflante (7), qui a une puissance d'aspiration modifiable entre une valeur de point mort et une valeur augmentée, une ouverture d'air secondaire (5.7) pouvant être ouverte et fermée, et **en ce qu'**il est prévu du côté de refoulement de la soufflante d'aspiration (7) une soupape asservie (8) destinée à modifier la section libre de la sortie en fonction d'un signal produit par la commande de machine et représentatif de la vitesse d'introduction de l'ébauche (4) dans la cavité de moule (5.1).

6. Dispositif selon la revendication 5, **caractérisé en ce que** l'ouverture d'air secondaire se compose d'au moins un canal (5.7), qui débouche sur au moins une vanne (5.4) disposée à l'extrémité du côté aspiration du moule de soufflage (5), de telle sorte que la vanne ne mette en communication le canal (5.7) avec l'ouverture de raccordement d'aspiration du moule de soufflage (5) que lorsqu'elle se trouve dans sa position avancée fermant hermétiquement le moule de soufflage (5).

7. Dispositif selon la revendication 5, **caractérisé en ce qu'**il est prévu sur le côté d'aspiration de la soufflante (7) une soupape à 3/2 voies (10) qui peut être actionnée via une ligne de commande par la commande de machine et dont le premier raccord (10.1) est relié à l'extrémité du moule de soufflage (5) éloignée de l'ouverture d'introduction, le deuxième raccord (10.2) est relié au raccord d'aspiration (7.2) de la soufflante d'aspiration (7) et le troisième raccord (10.3) forme l'ouverture d'air secondaire pouvant être ouverte et fermée, qui communique librement avec l'air ambiant.

8. Dispositif selon la revendication 7, **caractérisé en ce que** le troisième raccord (10.3) de la soupape à 3/2 voies (10) est précédé d'un silencieux (11).

9. Dispositif selon la revendication 7 ou 8, **caractérisé en ce que** le troisième raccord (10.3) de la soupape à 3/2 voies (10) est précédé d'un filtre à grosses particules.

10. Dispositif pour la fabrication d'objets creux en plastique par introduction d'une ébauche (4) en forme de tube en matière thermoplastique dans un moule à souffler (5) dont la cavité (5.1) est reliée, à son extrémité opposée à l'ouverture d'introduction, au raccord d'aspiration (7.2) d'une soufflante d'aspiration (7) produisant un flux d'air d'aspiration de vitesse variable, en particulier pour la mise en oeuvre du procédé selon la revendication 5, **caractérisé en ce que** fut le côté de refoulement (7.3) de la soufflante d'aspiration (7), qui a une puissance d'aspiration variable entre une valeur de point mort et une valeur augmentée, communique avec le côté d'aspiration (7.2) de celle-ci par une dérivation (29) et une soupape asservie (28) afin de modifier la section libre de la dérivation.

11. Dispositif selon la revendication 10, **caractérisé en ce que** la soupape est une soupape différentielle (28, 28.2) dont l'entrée communique avec la sortie de pression de la soufflante d'aspiration (7), la première sortie avec l'environnement et la seconde sortie avec la dérivation (29).

12. Dispositif selon l'une quelconque des revendications 5 à 11, **caractérisé en ce qu'**il est prévu dans la conduite d'aspiration (6) un capteur (12) mesurant la vitesse du flux d'air aspiré ou la dépression dans la conduite d'aspiration (6) et dont les raccords sont reliés à la commande de machine.
